# EUROPÄISCHE PATENTSCHRIFT

(11) **EP 3 744 472 B1**
(45) Veröffentlichungstag und Bekanntmachung des Hinweises auf die Patenterteilung: **06.11.2024**
(21) Anmeldenummer: 20176761.3
(22) Anmeldetag: 27.05.2020
(51) Int. Cl.: B23P 19/00, B23P 19/02, B62D 65/02

(54) **EINSETZTEILE-FÜGESTATION**
INSERT JOINING STATION
STATION D'ASSEMBLAGE DE PIÈCES D'INSERTION

(30) Priorität: 27.05.2019 DE 102019003668
(43) Veröffentlichungstag der Anmeldung: 02.12.2020
(73) Patentinhaber: Schmitt Prof. Möhlmann & Collegen Wirtschaftskanzlei - Insolvenzverwalter Aktiengesellschaft, 08056 Zwickau (DE)
(72) Erfinder: Schmitt, Jens, 08056 Zwickau (DE)
(74) Vertreter: Schneiders & Behrendt Bochum

(56) Entgegenhaltungen:
- DE-A1- 102005 041 679
- DE-A1- 102015 014 221
- DE-U1- 202017 101 643
- JP-A- H01 212 673
- JP-A- H04 244 324
- JP-A- H11 151 625
- US-A1- 2019 134 817

## Beschreibung

Die Erfindung betrifft eine Einsetzteile-Fügestation nach dem Oberbegriff des Patentanspruches 1.

Derartige Einsetzteile-Fügestationen sind automatisierte Montagearbeitsplätze, die mit mindestens einem Industrieroboter ausgestattet sind, mit dem als Manipulator die zu fügenden Teile, hier Einsetzteile, die als dünnwandige Hart-Kunststoffteile ausgebildet sind, an die Fügestelle zugeführt, magaziniert und in der Fügestelle durch drückendes Einsetzen in blechartige Bearbeitungsteile gefügt werden.

Dazu ist der Industrieroboter mit einem multifunktionalen Werkzeugkopf ausgestattet, mit dem, wie beispielhaft in den Erfindungsanmeldungen
- DE 10 2013 227 146 A1,
- DE 10 2005 041 679 A1 und
- DD 234 249 A1
beschrieben, die Einsetzteile zugeführt, ausgerichtet und magaziniert werden, ehe sie mit einem Eindrückstößel gefügt werden.

Die mit einem derartigen Industrieroboter ausgerüstete Einsetzteile-Fügestation ist, ergänzt um weitere Funktionsmodule zur Bearbeitungsteile-Halterung und Einsetzteile-Speicherung um oder unter dem Industrieroboter, wie in
- DD 288 776 A5
beispielhaft vorgeschlagen, platziert angeordnet.

Nachteilig ist an diesen Lösungen, dass jeweils nur ein bestimmtes gleichdimensioniertes und geformtes Einsetzteil zeitlich nacheinander in die nacheinander zugeführten und aufgelegten Bearbeitungsteile eindrückend eingesetzt und gefügt werden kann.

Vorrichtungen zum Einsetzen von Tüllen, Stopfen und dgl. insbesondere in Kraftfahrzeugkarosserien sind aus JP H04 244 324 A, H 11 151 625 A, H 01 212 673 A sowie aus US 2019/0 134 817 A1 bekannt.

Gegenstand in
- DE 20 2017 101 643 A1 und in
- DE 10 2016 120 462 A1
sind als Fertigungsstation und Montageablaufsystem bezeichnete Fügestationen, bei denen mehrere Industrieroboter in einer Reihung an selbstständig und getrennt angeordneten Montagearbeitsplätzen platziert sind. Diese Strukturen bedingen ebenfalls, dass nur ein bestimmtes gleichdimensioniertes und geformtes Element oder Einsetzteil gefügt werden kann und Teile-Umstellungen aufwendige investive Stationsänderungen erfordern.

Die Problemstellung dieser beispielhaft als Stand der Technik benannten Lösungen ergibt sich aus deren unzweckmäßigen Strukturausbildungen. Ein gleichzeitiges unterschiedlich gerichtetes einsetzendes Fügen von unterschiedlich ausgebildeten Einsetzteilen in blechartige Bearbeitungsteile ist mit den bekannten Fügestationen nicht möglich. Es ist Aufgabe dieser Erfindung, Strukturausbildungen vorzuschlagen, um als dünnwandige Hart-Kunststoffteile ausgebildete Einsetzteile unaufwendig und bedienungssicher zu fügen.

Diese in den benannten erfinderischen Lösungen des Standes der Technik festgestellten Problemstellungen bei der Ausbildung von Setzwerkzeugen von komplexen Einsetzteile-Fügestationen für dünnwandige Hart-Kunststoffteile sind durch die Merkmale des Patentanspruches 1 gelöst.

Auf und über einer Fundamentebene sind in einer Modul-Anordnungsebene einer Einsetzteile-Fügestation alle Funktionsmodule für das Speichern, das Zuführen, das Magazinieren, das Zubringen in einer Einsetzteile-Zuführebene und für das Fügen der Einsetzteile in einer Einsetzteile-Fügeebene in Aufnahmeöffnungen eines blechartigen Bearbeitungsteiles, welches zwischen diesen Modulen, auf einem Auflage- und Hebegestell aufliegend positioniert und fixiert ist, angeordnet.

In der Einsetzteile-Fügestation sind mindestens je ein Speichermodul für Einsetzteile einer der Formen A, B, C und D angeordnet. Diese Speichermodule bestehen aus jeweils einem Modulbehälter, in dem eine elektromotorisch angetriebene Schwingförderung und eine Fördereinrichtung zur Modulbehälter-Entleerung und zur Zuführung der jeweiligen Einsetzteile zu einem der Einsetzteile-Positioniermagazine angeordnet sind. Dies erfolgt über Ausricht- und Zuführschienen getrennt nach den Formen A, B, C und D der Einsetzteile.

In den Einsetzteile-Positionsmagazinen, die auf Magazin-Untergestellen aufsetzend gelagert sind, sind austauschbar in Teilschritten schwenkbare Einsetzteile-Positionierscheiben mit von den Einsetzteile-Zubringsektionen aushebbaren Magazinscheiben und mit einem Greifbackensystem ausgestattet, aufgenommen.

Die Gelenkarmroboter, mit denen aus den Einsetzteile-Positionierscheiben die Einsetzteile-Positionieraufnahmen mittels eines Haltegreifers ausgehoben und entnommen werden, sind an ihrem Werkzeugkopf auch mit je einem Einsetzstößel als Einsetzteilwerkzeug bestückt, die den Einsetzteilen der Formen A, B, C und D zuordenbar sind.

Auf der Fundamentebene einer Einsetzteile-Fügestation sind außerdem gekapselte Armaturen einer Steuerungssektion für die Koordinierung von Verfahrensablauf und Modulfunktionen angeordnet.

Beidseitig einer Bearbeitungsteil-Halte- und Bearbeitungssektion sind Speichersektionen, Einsetzteile-Zuführsektionen, Magaziniersektionen, Einsetzteile-Zubringestationen sowie Steuerungssektionen aneinander liegend angeordnet. Maß- und formabhängig von dem jeweiligen mit Einsetzteilen bestückten Bearbeitungsteil können mit dieser Sektionsanordnung kompakt strukturierte Einsetzteile-Fügestationen, in einer gemeinsamen Sicherheitseinhausung platziert, gebildet werden.

Ergänzende Merkmale einer so strukturierten Ausbildung von Einsetzteile-Fügestationen sind in den Patentansprüchen 2 bis 4 benannt.

Sie betreffen
- variable Anwendungen und Anwendungsstückzahlen der Funktionsmodule,
- Ausbildungsvarianten der Fundamentplatte als Modul-Anordnungsebene,
- ein Platzierungslochraster für diese Module,
- Ausbildungsvarianten der Einsetzteile-Positionierscheiben in den Magazinen und
- verschiedenartig ausgebildete Einsetzteile und deren Werkzeughandling.

Die Erfindung ist, an einem Ausführungsbeispiel vereinfacht in den Figuren dargestellt und im folgenden Beschreibungsteil weitergehend erläutert.

Es zeigen
- Fig. 1:: eine 3D-Teilansicht mit Modulen der Einsetzteile-Zubringesektion und der Bearbeitungsteil-Halte- und Bearbeitungssektion in einer Rüstsituation
- Fig. 2:: eine Vorderansicht nach Fig. 1, ergänzt um die zutreffende Sektoren- und Ebenen-Struktur
- Fig. 3:: eine Draufsicht auf eine Einsetzteile-Fügestation mit einer Mehrstück-Modulanwendung an einem Blechteil in der Sektorenstruktur

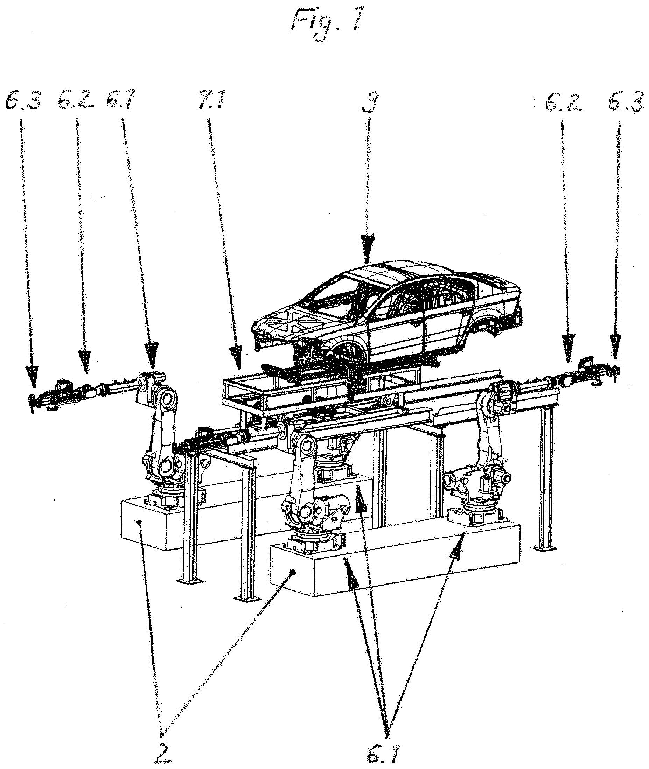

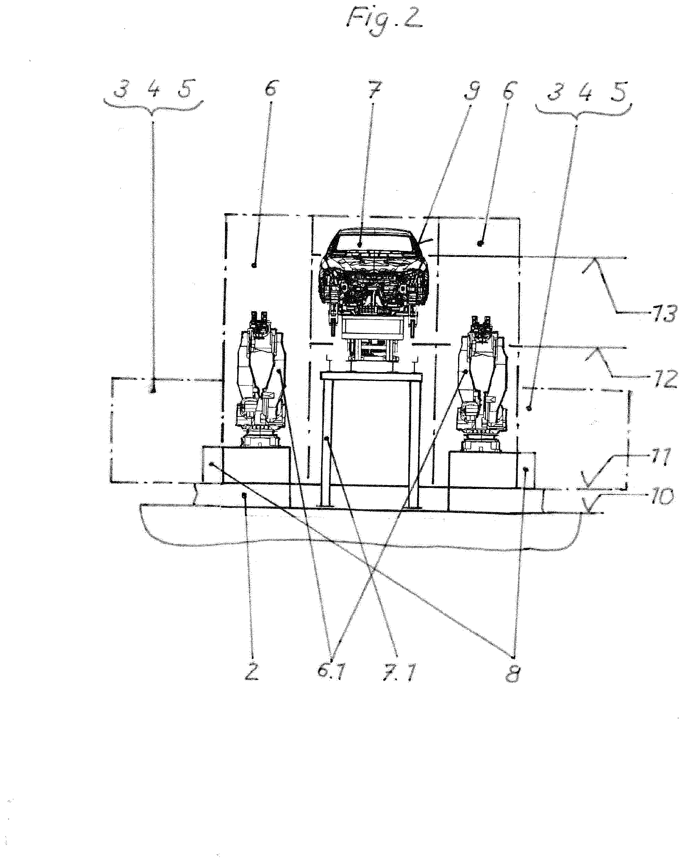

Die in Fig. 1 und Fig. 2 dargestellten Teilansichten der Einsetzteile-Fügestation 1 zeigen als Funktionsmodule vier auf zwei Einzelkomponenten einer Fundamentplatte 2 angeordnete Gelenkarmroboter 6.1 mit Werkzeugköpfen 6.2 und Einsetzstößel 6.3.

Das blechartige Bearbeitungsteil 9 ist eine Autokarosserie, welche auf einem Auflage- und Hebegestell 7.1 aufliegend positioniert und fixiert ist. In nicht dargestellten Aufnahme-Öffnungen dieses Karosserie-Blechteiles sollen ebenfalls nicht dargestellte Einsetzteile mit den vier Gelenkarmrobotern 6.1 und ihrem in dem Werkzeugkopf 6.2 aufgenommenen Einsetzstößel 6.3 allseitig drückend eingesetzt und unterschiedlich gerichtet gefügt werden.

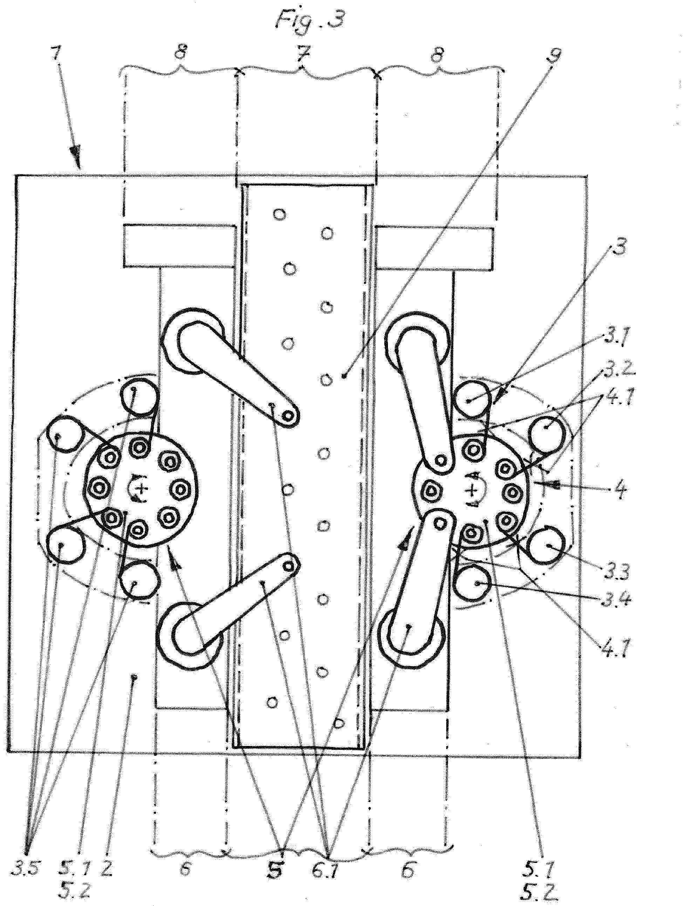

Die in Fig. 3 dargestellte Einsetzteile-Fügestation 1 umfasst für das Fügen von Einsetzteilen in Aufnahmeöffnungen eines als Abdeckblech ausgebildeten Bearbeitungsteiles 9 beidseitig an diesem angeordnete Funktionsmodule. Das sind hier einzelfallbezogen insgesamt
- vier Gelenkarmroboter 6.1, die mit
- zwei Einsetzteile-Positioniermagazinen 5.1 und deren in Teilschritten
- schwenkbeweglichen Einsetzteile-Positionierscheiben 5.2 sowie deren heraushebbaren Magazinscheiben 5.3, wenn diese, mit Einsetz- bzw. Fügeteilen unterschiedlicher Form und Größe, bestückt, funktions-und ablaufverbunden sind.

Die in die Modulbehälter 3.5 der jeweils vier Speichermodule 3.1, 3.2, 3.3 und 3.4 eingefüllten nicht dargestellten Einsetz- bzw. Fügeteile in den unterschiedlichen Formen und Größen A, B, C und D sind über Ausricht- und Zuführschienen 4.1 mit diesen Einsetzteile-Positioniermagazinen 5.1 und den darauf angeordneten und entnehmbaren Magazinscheiben 5.3 funktions- und ablaufverbunden.

In Fig. 2 und in Fig. 3 sind bearbeitungsteilabhängig die Strukturen- und die Ebenenausbildungen von automatisiert steuerbaren Einsetzteile-Fügestationen 1 dargestellt. Die von diesen gebildeten körperlichen Stationsstrukturen bilden raumsparend in Fig. 2 beispielhaft einen Körper in ⊥-Form und in Fig. 3 einen Rechtkantkörper, der jeweils mit einer nicht dargestellten Sicherheitseinhausung versehen ist.

Im Einzelnen sind die Funktionsmodule flexibel abstandsbezogen positionierbar in
- zwei Speichersektionen 3,
- zwei Einsetzteile-Zuführsektionen 4,
- zwei Magaziniersektionen 5,
- vier Einsetzteile-Zubringesektionen 6
   beidseitig an und unter
- einer Bearbeitungsteil-Halte- und Bearbeitungssektion 7
   sowie an der stirnseitigen
- Steuerungssektion 8
   platziert und in je einer
- Fundamentebene 10,
- Modul-Anordnungsebene 11,
- Einsetzteile-Zuführebene 12 sowie
- Einsetzteile- Fügeebene 13
angeordnet und justierbar.

Die Aufgaben- und Problemstellungen eines gleichzeitigen, unterschiedlich gerichteten Fügens unterschiedlich dimensionierter und geformter Einsetzteile mit einer modularen unaufwendig veränderbaren Modulanordnung sowie -ausbildung werden so realisiert.

**Bezugszeichenliste**

| | | |
|---|---|---|
| 1 | Einsetzteile-Fügestation | |
| 2 | Fundamentplatte | von 1 |
| 3 | Speichersektion(en) | in 1 |
| 3.1 | Speichermodul für Einsetzteile Form A | |
| 3.2 | Speichermodul für Einsetzteile Form B | |
| 3.3 | Speichermodul für Einsetzteile Form C | |
| 3.4 | Speichermodul für Einsetzteile Form D | |
| 3.5 | Modulbehälter | von 3. 1 bis 3.4 |
| | | |
| 4 | Einsetzteile-Zuführsektion(en) | in 1 |
| 4.1 | Ausricht- und Zuführschienen | von 3. 1 bis 3.4 zu 5.1 |
| | | |
| 5 | Magaziniersektion(en) | in 1 |
| 5.1 | Einsetzteile-Positioniermagazin | |
| 5.2 | Einsetzteile-Positionierscheibe(n) | an 5.1 |
| 5.3 | Magazinscheiben | |
| | | |
| 6 | Einsetzteile-Zubringesektion(en) | in 1 |
| 6.1 | Gelenkarmroboter | |
| 6.2 | Werkzeugkopf für Einsetzteile | an 6.1 |
| 6.3 | Einsetzstößel | in 6.2 |
| | | |
| 7 | Bearbeitungsteil-Halte- und Bearbeitungssektion | in 1 |
| 7.1 | Auflage- und Hebegestell | für 9 |
| | | |
| 8 | Steuerungssektion für Verfahrensablauf und Modul-Funktionen | in 1 |
| 9 | Bearbeitungsteil | |
| 10 | Fundamentebene | an 1 |
| 11 | Modul-Anordnungsebene | an 1 |
| 12 | Einsetzteile-Zuführebene | an 1 |
| 13 | Einsetzteile-Fügeebene | an 1 |

## Patentansprüche

1. Einsetzteile-Fügestation, die in einer modularen veränderbaren Sektionen-Struktur ausgebildet ist, um gleichzeitig unterschiedliche als dünnwandige Hart-Kunststoffteile ausgebildete Einsetzteile zuzuführen und allseitig gerichtet in durchgehende sowie passend dimensionierte und geformte Aufnahmeöffnungen von blechartigen Bearbeitungsteilen mit einem stößelartigen Werkzeug drückend einzusetzen und selbstklemmend zu fügen, **dadurch gekennzeichnet, dass** auf und über einer Fundament-Ebene (10) in einer Modul-Anordnungsebene (11) einer Einsetzteile-Fügestation (1) aus mindestens
• einer Speichersektion (3) mit mindestens je einem
Speichermodul (3.1) für Einsetzteile einer Form A,
Speichermodul (3.2) für Einsetzteile einer Form B,
Speichermodul (3.3) für Einsetzteile einer Form C und
einem Speichermodul (3.4) für Einsetzteile einer Form D
aus jeweils einem Modulbehälter (3.5), in dem ein elektromotorisch angetriebener Schwingförderer und eine Fördereinrichtung für die Einsetzteile zur Modulbehälter-Entleerung sowie zur Zuführung zu einem der Einsetzteile-Positioniermagazine (5.1) angeordnet ist, besteht,
• einer Einsetzteile-Zuführsektionen (4) mit Ausricht- und Zuführschienen (4.1) für ausgerichtet und vereinzelt zuzuführende Einsetzteile in den Formen A, B, C und D getrennt,
• einer Magaziniersektion (5), in der Einsetzteile-Positionierungen in mindestens einem der Einsetzteile-Positioniermagazine (5.1), welche auf einem Magazin-Untergestell gelagert und jeweils eine in Teilschritten schwenkbare Einsetzteile-Positionierscheibe (5.2) mit aushebbaren Magazinscheiben 5.3, die mit einem Greifbackensystem zur sicheren Entnahme durch den Werkzeugkopf 6.2 der Einsetzteile-Zubringstation ausgestattet, angeordnet sind, und
• einer Einsetzteile-Zubringesektion (6), die aus mindestens je einem Gelenkarmroboter (6.1) besteht, der mit einem Haltegreifer für aushebbare Magazinscheiben 5.3 und mit je einem Einsetzstößel (6.3) an seinem Werkzeugkopf (6.2) als Einsetzteilwerkzeug bestückt und den Einsetzteilen der Formen A, B, C und D zuordenbar sind, ausgebildet und in einer Einsetzteile-Zuführebene (12) angeordnet sind,
**dass** eine Bearbeitungsteil-Halte- und Bearbeitungssektion (7) mit einem Auflage- und Hebegestell (7.1) für ein Bearbeitungsteil (9) in einer oberen Einsetzteile-Fügeebene (13) positioniert,
**dass** eine Steuerungssektion (8) für Koordinierung von Verfahrensablauf und Modul-Funktionen auf der Fundamentebene (10) angeordnet, **dass** beidseitig einer Bearbeitungsteil-Halte- und Bearbeitungssektion (7), Speichersektionen (3), Einsetzteile-Zuführsektionen (4), Magaziniersektionen (5), Ein-setzteile-Zubringesektionen (6) sowie gekapselte Armaturen von Steuerungssektionen (8) aneinanderliegend angeordnet und
**dass** maß- sowie formabhängig von einem Bearbeitungsteil (9), in dem die Einsetzteile in den Formen A, B, C und D zu fügen sind, eine kompakt strukturierte Einsetzteile-Fügestation (1), in einer gemeinsamen Sicherheitseinhausung platziert, angeordnet sind.

2. Einsetzteile-Fügestation nach Patentanspruch 1, **dadurch gekennzeichnet, dass** die Fundamentebene (10) als Fundamentplatte (2) ausgebildet ist, die abhängig von einer variablen Anordnung und Anzahl der Module
• Speichermodule (3.1 bis 3.4) mit Modulbehältern (3.5),
• Einsetzteile-Positioniermagazine (5.1) mit Einsetzteile-Positionierscheiben (5.2),
• Gelenkarmroboter (6.1) mit Werkzeugköpfen (6.2) und Einsetzstößeln (6.3) sowie von der Art, Struktur und Dimensionierung des Bearbeitungsteiles (9) ausgebildeten Stütz- und Halterahmen eines
• Auflage- und Hebegestells (7.1),
eine gemeinsame Modul-Anordnungsebene (11) bildet und wahlweise als
• Rechteckplatte,
• Kreisringsplatte oder
• rahmenförmige Platte geformt ist sowie für eine
• plattenunabhängige Fundamentflächennutzung ausgebildet ist.

3. Einsetzteile-Fügestation nach Patentanspruch 1 und 2, **dadurch gekennzeichnet, dass** ein Einsetzteile-Positioniermagazin (5.1) einer Magaziniersektion (5) mehrere in Teilschritten schwenkbare auf einem Magazin-Untergestell gelagerte Einsetzteile-Positionierscheiben (5.2) mit aushebbaren Positionieraufnahmeringen, in unterschiedlichen Raster- und Abstands-Anordnungen für
• Einsetzteile einer der Formen A, B, C oder D,
• Einsetzteile mehrerer Formen A, B, C und D
ausgebildet, umfasst.

4. Einsetzteile-Fügestation nach Patentanspruch 1 bis 3, **dadurch gekennzeichnet, dass** die mit einem Gelenkarmroboter (6.1) zu fügenden
• Einsetzteile einer Form A, Tüllen,
• Einsetzteile einer Form B, Dübel,
• Einsetzteile einer Form C, Kegel,
• Einsetzteile einer Form D, Stopfen
und in anderen Formen hergestellte dünnwandige Hart-Kunststoffteile sind, die mit einem Saugluft-Haltekopf am Werkzeugkopf (6.2) vereinzelt und lageorientiert aufgenommen, während des Einsetzens mit jeweils einem Einsetzstößel (6.3) in Öffnungen eines Bearbeitungsteiles (9) gehalten sind.

5. Einsetzteile-Fügestation nach Patentanspruch 2, **dadurch gekennzeichnet, dass** die Fundamentplatte (2) mit einem Lochraster engbeabstandeter Justier- und Fixierbohrungen für die in unterschiedliche Senkrechtstellungen und Funktionsabständen zu platzierenden Module ausgestattet ist.

## Claims

1. An insertion part joining station, which is formed in a modular, variable, sectional structure for simultaneously feeding in various insertion parts in the form of thin-walled rigid plastic parts and for inserting and pushing them, oriented on all sides, into through-openings of an appropriate size and shape in sheet metal-like machining parts using a ram-like tool and for joining them in a self-locking manner, **characterised in that** on and above a base level (10) in a module arrangement level (11) of an insertion part joining station (1), comprising
• at least one storage section (3), with in each case at least one
storage module (3.1) for insertion parts of a shape A,
storage module (3.2) for insertion parts of a shape B,
storage module (3.3) for insertion parts of a shape C, and
storage module (3.4) for insertion parts of a shape D,
consisting in each case of a module container (3.5), in which an electric motor-driven vibrating conveyor and a conveying device for the insertion parts for emptying the module container and for feeding to one of the insertion part positioning magazines (5.1) is arranged,
• at least one insertion part feeder section (4) having alignment and feeder rails (4.1) for insertion parts that are to be fed in an aligned and separated manner, divided into shapes A, B, C and D,
• at least one magazine loading section (5), in which insertion part positioning devices are arranged in at least one of the insertion part positioning magazines (5.1), which are supported on a magazine support frame and have in each case an incrementally swivelling insertion part positioning disc (5.2) with removable magazine discs (5.3) equipped with a gripping jaw system to allow for secure removal by the tool head (6.2) of the insertion part loading station, and
• at least one insertion part loading section (6), consisting in each case of at least one articulated arm robot (6.1), which is fitted with a holding gripper for removable magazine discs (5.3) and with an insertion ram (6.3) on each tool head (6.2) as an insertion part tool, which can be assigned to the insertion parts of shapes A, B, C and D, arranged in an insertion part feeder level (12),
**in that** a machining part holding and machining section (7) having a support and lifting rack (7.1) for a machining part (9) is positioned in an upper insertion part joining level (13),
**in that** a control section (8) for coordinating the process flow and module functions is arranged on the base level (10),
**in that** storage sections (3), insertion part feeder sections (4), magazine loading sections (5), insertion part loading sections (6) and encapsulated fittings of control sections (8) are arranged adjacent to one another on both sides of a machining part holding and machining section (7), and
**in that,** depending on the dimensions and shape of a machining part (9) in which the insertion parts in shapes A, B, C and D are to be joined, a compactly structured insertion part joining station (1) positioned in a common safety enclosure is formed.

2. The insertion part joining station according to claim 1, **characterised in that** the base level (10) is configured as a base plate (2) which, depending on a variable arrangement and number of modules, namely
• storage modules (3.1 to 3.4) with module containers (3.5),
• insertion part positioning magazines (5.1) with insertion part positioning discs (5.2),
• articulated arm robots (6.1) with tool heads (6.2) and insertion rams (6.3), and supporting and holding frames, configured in accordance with the type, structure and size of the machining part (9), of a
• support and lifting rack (7.1),
forms a common module arrangement level (11) and is formed optionally as a
• rectangular plate,
• annular plate, or
• frame-like plate, and
• is configured for use on a base surface independently of the plate.

3. The insertion part joining station according to claim 1 and 2, **characterised in that** an insertion part positioning magazine (5.1) of a magazine loading section (5) comprises a plurality of incrementally swivelling insertion part positioning discs (5.2) supported on a magazine support frame and having removable positioning holding rings, configured in various grid and spacing arrangements for
• insertion parts of one of shapes A, B, C or D,
• insertion parts of multiple shapes A, B, C and D.

4. The insertion part joining station according to claim 1 to 3, **characterised in that** the insertion parts to be joined by an articulated arm robot (6.1)
• of a shape A, sleeves,
• of a shape B, dowels,
• of a shape C, cones,
• of a shape D, stoppers,
and in other shapes are thin-walled rigid plastic parts which are held separately and in a positionally oriented manner by a vacuum holding head on the tool head (6.2) while being inserted in each case by an insertion ram (6.3) into openings in a machining part (9).

5. The insertion part joining station according to claim 2, **characterised in that** the base plate (2) is equipped with a hole matrix of closely spaced adjusting and fixing holes for the modules, which are to be positioned in different vertical positions and at different functional intervals.

## Revendications

1. Poste d'assemblage de pièces d'insertion, qui est réalisé dans une structure modulaire modifiable à sections, afin d'amener simultanément différentes pièces d'insertion, réalisées sous forme de pièces en matière plastique dure à paroi mince, et de les insérer par pression et de les assembler par auto-serrage, orientées de tous les côtés, dans des ouvertures de réception traversantes, ainsi que dimensionnées et formées de manière appropriée, de pièces d'usinage de type tôle, avec un outil de type poussoir, **caractérisé en ce que** sur et au-dessus d'un plan de fondation (10), dans un plan d'agencement de modules (11) d'un poste d'assemblage de pièces d'insertion, au moins
• une section de stockage (3) avec au moins un module de stockage (3.1) pour des pièces d'insertion d'une forme A, un module de stockage (3.2) pour des pièces d'insertion d'une forme B, un module de stockage (3.3) pour des pièces d'insertion d'une forme C et un module de stockage (3.4) pour des pièces d'insertion d'une forme D, constitués respectivement d'un contenant de module (3.5) dans lequel sont agencés un transporteur vibrant entraîné par moteur électrique et un appareil de transport pour les pièces d'insertion pour le vidage du contenant de module ainsi que pour l'amenée à l'un des magasins de positionnement de pièces d'insertion (5.1),
• une section d'amenée de pièces d'insertion (4) avec des rails d'alignement et d'amenée (4.1) pour des pièces d'insertion alignées et à amener individuellement dans les formes A, B, C et D séparément,
• une section de magasinage (5), dans laquelle sont agencés des positionnements de pièces d'insertion dans au moins l'un des magasins de positionnement de pièces d'insertion (5.1), qui sont montés sur un châssis de magasin, et respectivement un disque de positionnement de pièces d'insertion (5.2) pivotant par étapes partielles avec des disques de magasin soulevables (5.3), qui sont équipés d'un système de mâchoires de préhension pour le prélèvement sûr par la tête d'outil (6.2) du poste d'approvisionnement en pièces d'insertion, et
• une section d'approvisionnement en pièces d'insertion (6), qui est constituée d'au moins un robot à bras articulé (6.1), qui est équipé d'une pince de maintien pour les disques de magasin soulevables (5.3) et d'un poussoir d'insertion (6.3) sur sa tête d'outil (6.2) en tant qu'outil de pièce d'insertion et pouvant être affecté aux pièces d'insertion des formes A, B, C et D, sont réalisées et agencées dans un plan d'amenée de pièces d'insertion (12),
**en ce qu'**une section de maintien et d'usinage de pièces d'usinage (7) avec un bâti de support et de levage (7.1) pour une pièce d'usinage (9) est positionnée dans un plan d'assemblage de pièces d'insertion supérieur (13),
**en ce qu'**une section de commande (8) pour la coordination du déroulement du processus et des fonctions des modules est agencée sur le plan de fondation (10),
**en ce que** de part et d'autre d'une section de maintien et d'usinage de pièces d'usinage (7), des sections de stockage (3), des sections d'amenée de pièces d'insertion (4), des sections de magasinage (5), des sections d'approvisionnement en pièces d'insertion (6) ainsi que des armatures encapsulées de sections de commande (8) sont agencées les unes à côté des autres et
**en ce qu'**en fonction des dimensions et de la forme d'une pièce d'usinage (9) dans laquelle les pièces d'insertion doivent être assemblées dans les formes A, B, C et D, un poste d'assemblage de pièces d'insertion (1) à structure compacte, placé dans une enceinte de sécurité commune, est agencé.

2. Poste d'assemblage de pièces d'insertion selon la revendication 1, **caractérisé en ce que** le plan de fondation (10) est réalisé sous forme de plaque de fondation (2) qui, en fonction d'un agencement et d'un nombre variables des modules
• modules de stockage (3.1 à 3.4) avec contenants de modules (3.5),
• magasins de positionnement de pièces d'insertion (5.1) avec disques de positionnement de pièces d'insertion (5.2),
• robot à bras articulé (6.1) avec têtes d'outils (6.2) et poussoirs d'insertion (6.3) ainsi que cadre d'appui et de maintien d'un
• châssis de support et de levage (7.1) réalisé par le type, la structure et le dimensionnement de la pièce d'usinage (9),
• forme un plan d'agencement de modules (11) commun et est formée au choix sous forme de
• plaque rectangulaire,
• plaque circulaire ou
• plaque en forme de cadre et est réalisée pour une
• utilisation de la surface de fondation indépendante de la plaque.

3. Poste d'assemblage de pièces d'insertion selon les revendications 1 et 2, **caractérisé en ce qu'**un magasin de positionnement de pièces d'insertion (5.1) d'une section de magasinage (5) comprend plusieurs disques de positionnement de pièces d'insertion (5.2) pivotant par étapes partielles, montés sur un châssis de magasin, avec des anneaux de réception de positionnement soulevables, réalisés dans des agencements de trame et d'espacement différents pour
• des pièces d'insertion d'une des formes A, B, C ou D,
• des pièces d'insertion de plusieurs formes A, B, C et D.

4. Poste d'assemblage de pièces d'insertion selon les revendications 1 à 3, **caractérisé en ce que** les pièces d'insertion à assembler avec un robot à bras articulé (6.1) sont
• des pièces d'insertion d'une forme A, des douilles,
• des pièces d'insertion d'une forme B, des chevilles,
• des pièces d'insertion d'une forme C, des cônes,
• des pièces d'insertion d'une forme D, des bouchons et des pièces en matière plastique dure à paroi mince fabriquées dans d'autres formes, qui sont reçues individuellement et orientées en position sur la tête d'outil (6.2) avec une tête de maintien à air d'aspiration, sont maintenues pendant l'insertion par un poussoir d'insertion (6.3) respectif dans des ouvertures d'une pièce d'usinage (9).

5. Poste d'assemblage de pièces d'insertion selon la revendication 2, **caractérisé en ce que** la plaque de fondation (2) est équipée d'un réseau de trous d'ajustage et de fixation étroitement espacés pour les modules à placer dans différentes positions verticales et à différentes distances fonctionnelles.
